Europäisches Patentamt

European Patent Office

Office européen des brevets

(19)

(11) Numéro de publication: **0 207 015**
**A2**

## (12) DEMANDE DE BREVET EUROPEEN

(21) Numéro de dépôt: 86830170.6

(51) Int. Cl.⁴: **F17D 1/04** , F17D 5/04

(22) Date de dépôt: 18.06.86

(30) Priorité: 18.06.85 IT 1168585 U
18.06.85 IT 1168685 U
25.11.85 IT 952585

(43) Date de publication de la demande:
30.12.86 Bulletin 86/52

(84) Etats contractants désignés:
AT BE CH DE FR GB LI LU NL SE

(71) Demandeur: **DITTA PACETTI ANTONIO di Silvano & Andrea Pacetti**
**Piazza SS. Rosario 7**
**I-50046 Poggio a Caiano Firenze(IT)**

(72) Inventeur: **Pacetti, Andrea**
**Piazza SS. Rosario, 7**
**I-50046 Poggio A Caiano Firenze(IT)**

(74) Mandataire: **Martini, Lazzaro**
**Ufficio Brevetti Ing. Lazzaro Martini Via Brunelleschi, 1**
**I-50123 Firenze(IT)**

(54) **Collecteur ventilé pour réseau de distribution du gaz pour usage domestique ou autre.**

(57) Collecteur ventilé de distribution du gaz comprenant une conduite (1) pour le transport du gaz, une gaine de ventilation (5) étanche, entourante, coaxiale et reliée avec précision à ladite conduite de manière délimiter des interstices (8) la pression atmosphèrique de recueillement et d'écoulement des éventuelles fuites de gaz provenant de la conduite - (1), à travers des décharges (6) en communication avec l'extérieur.

# Fig. 3

EP 0 207 015 A2

## Collecteur ventilé pour réseau de distribution du gaz pour usage domestique ou autre.

La présente invention concerne les conduites d'amenée de gaz sous pression -même très limitée -pour la distribution de gaz combustible à des installations domestiques ou d'autres types, et se rapporte plus particulièrement un collecteur ventile de distribution de gaz pour usage domestique ou autre.

L'utilisation du gaz combustible pour usages civils et industriels a connu ces dernières années un accroissement notable. Dans tous les domaines d'application de ce combustible, on rencontre des indications et prescriptions normatives qui tendent à assurer la sécurité au maximum.

Il va de soi que l'usage domestique du gaz est de loin celui qui exige la plus grande attention et la plus grande garantie de sécurité dans la mise en oeuvre, dans le réseau de distribution et dans les appareils.

Il est connu que le problème le plus important rencontré dans ce domaine d'application consiste dans les éventuelles pertes et fuites de gaz des conduites de distribution qui sont difficilement previsibles et individualisables et peuvent être la cause d'explosions avec des conséquences également graves autant pour les personnes que pour les choses, et de formations de mélanges très dangereux dans un espace fermé. De telle fuites de gaz peuvent avoir lieu soit le long des conduites soit dans les raccordements, c'est à dire en correspondance des raccrds, des joints, des manchons, des clapets, et autres.

Le principal but de la présente invention est de fournir un collecteur ventilé de distribution de gaz pour usage domestique et autre qui supprime les inconvénients des réseaux de distribution connu à ce jour, et en particulier adapté pour empêcher des fuites de gaz vers le local en canalisant les fuites éventuelles vers un système d'échappement en lieu sûr, c'est à dire à l'extérieur.

Ce résultat est atteint en conformité avec l'invention en réalisant un collecteur ventilé de distribution de gaz pour usage domestique ou autre caractérisé en ce qu'il comprend une conduite de transport du gaz, une gaine de ventilation étanche, entourante, coaxiale et reliée à ladite conduite de manière délimiter plusieurs interstices à la pression atmosphérique de recueillement et d'écoulement des éventuellles fuites de gaz qui proviennent de la conduite, à travers des décharges en communication avec l'extérieur. Pour les tronçons continus de conduite est prévue une gaine tubulaire dont la connexion à la conduite interne est obtenue soit par des déformations localisées vers l'intérieur soit au moyen d'une série de parois radiales espacées entre elles disposées entre ladite gaine et ladite conduite et destinés à delimiter des chambres longitudinales communicantes de recueillement et écoulement de gaz, lesdites parois s'étendant radialement à partir de ladite gaine externe, d'une seule pièce avec elle, vers ladite conduite interne.

Avantageusement, sont prévus des raccords à vis et à manchon coulissant, placés sur les gaines tubulaires et aptes former étanchéité sur les gaines par la présence de garnitions annulaires recues dans des parties à canal interne et déformables pour obtenir une réduction de diamètre desdits manchons.

En correspondance des coudes et dérivations peuvent être formées autour de tels coudes et de telles dérivations, des structures correspondantes géométriquement similaires, lesquelles forment des interstices de passage suivant la conformation des coudes et des dérivations, pour assurer la continuité des interstices ou chambres de recueillement et écoulement formés par les gaines autour des conduites, ou en variante peuvent être prévues des coudes et dérivations solidaires de parties formant gaines annulaires dans les zones de raccordement de ces parties, pour obtenir la possibilité de branchement avec des tronçons contigus de collecteur; en correspondance des courbes et branchements · de dérivation. La section étant réduite par rapport à la section annulaire qu'elles forment concentriquement aux raccords, mais en assurant toujours la continuité de l'interstice ou des chambres de recueillement et écoulement.

Suivant un autre mode de réalisation du collecteur ventilé selon l'invention les raccords, en particulier les joints manchons raccords simples et multiples, comprennent au moins un corps tubulaire destiné à engager avec l'une de ses extrémité la conduite interne gainée, une chambre annulaire, en correspondance de ladite extrémité, délimitée par la surface externe de ladite conduite. Ladite chambre étant en communication avec lesdits interstices ou lesdites chambres; des moyens pour mettre en communication ladite chambre avec lesdits conduits de décharge; des moyens pour bloquer de manière etanche ladite conduite interne dans ledit corps tubulaire. Suivant d'autres caractéristiques, ledit corps tubulaire délimite intérieurement un conduit ayant au moins une première et une deuxième extrémités, et qui présente un tronçon intermédiaire de forme tronconique évasé vers ladite deuxième extrémité; lesdits moyens pour bloquer de manière hermétique ladite conduite interne dans ledit corps tubulaire conduite dont l'extrémité est élargie et faite correspondre audit tronçon tronconique. Comprennent un élément tronconique destiné à provoquer le forcement étanche de cette extrémité èlargie contre ledit troçon tronconique, ledit élément tronconique étant bloqué par un écrou de blocage; ledit corps tubulaire est formé d'un élément métallique interne et d'un élément tubulaire externe en plastique, ce dernier étant destiné à l'assemblage par soudure électrique, au moyen d'un manchon auxiliaire. à la gain externe, en matière plastique.

Selon la première forme préférée de réalisation, la conduite interne du collecteur peut être constituée de cuivre ou d'aluminium et la gaine externe d'aluminium ou de matière plastique à autoextinction, ou encore la conduite interne et la gaine externe peuvent être toutes les deux constituées d'aluminium avec revêtement pelliculaire en matière plastique, ou enfin la conduite interne et la gaine externe qui composent le collecteur peuvent être toutes les deux en matière plastique à auto-extinction.

Ces avantages et caractéristiques de l'invention ainsi que d'autre seront mieux compris par tout homme du métier, de la description qui suit et à l'aide des dessins annexés donnés en tant qu'exemplification pratique de l'invention, mais à ne pas considérer au sens limitatif; et dans lesquels:

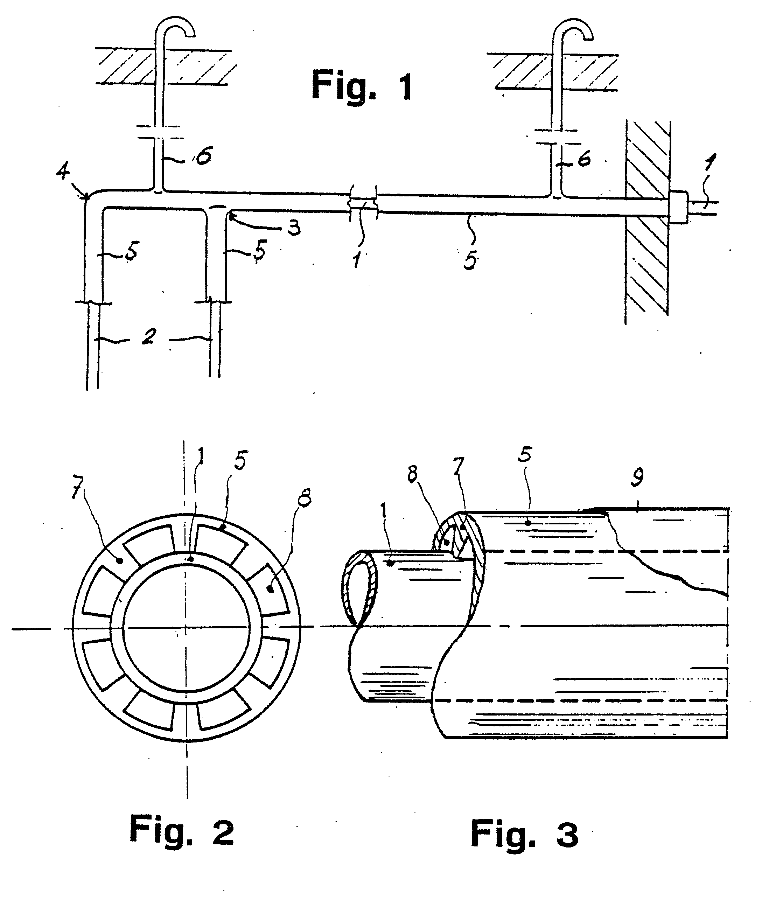

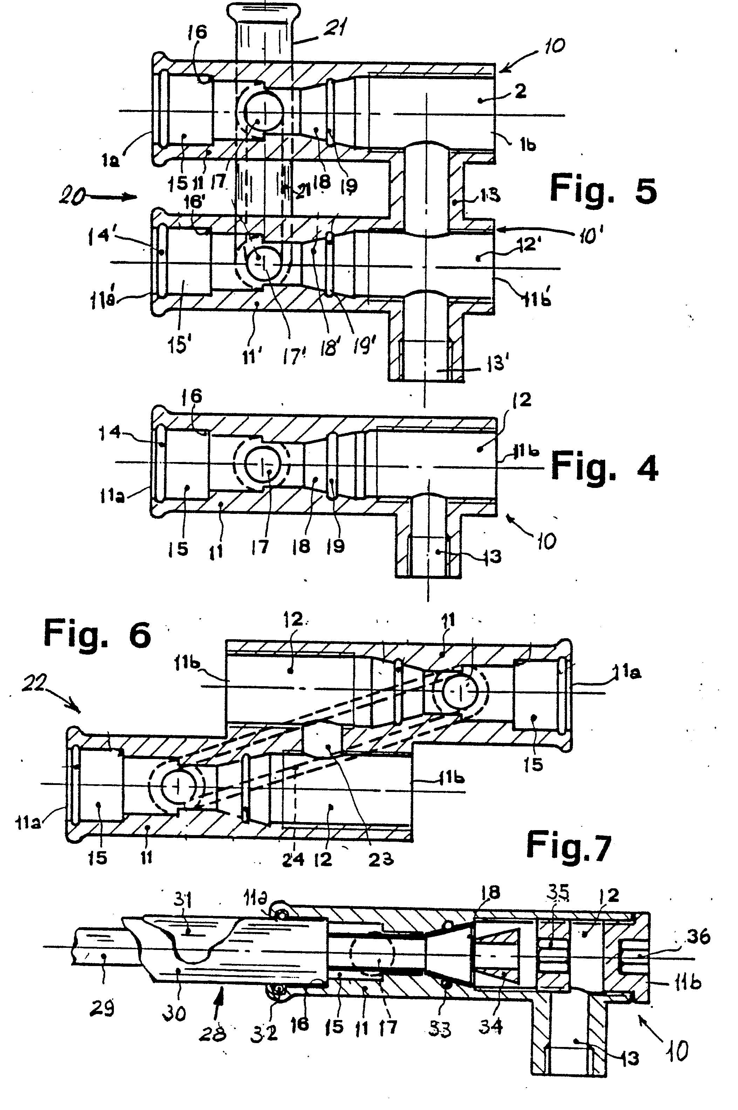

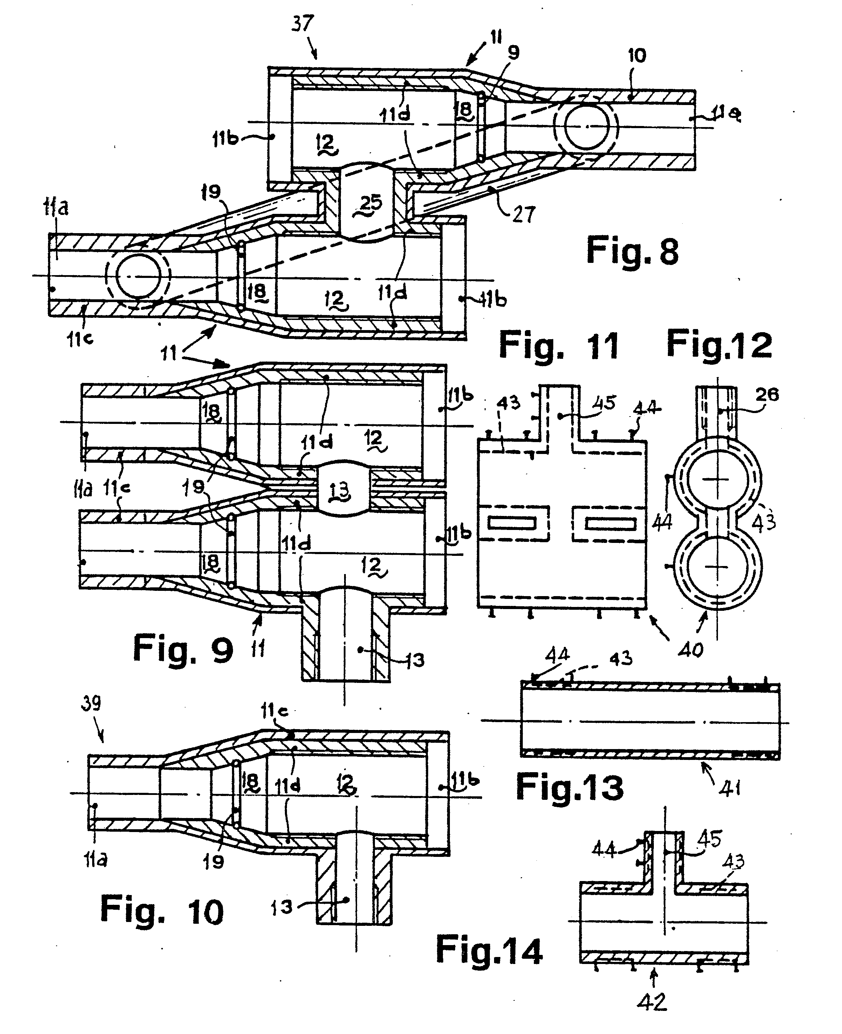

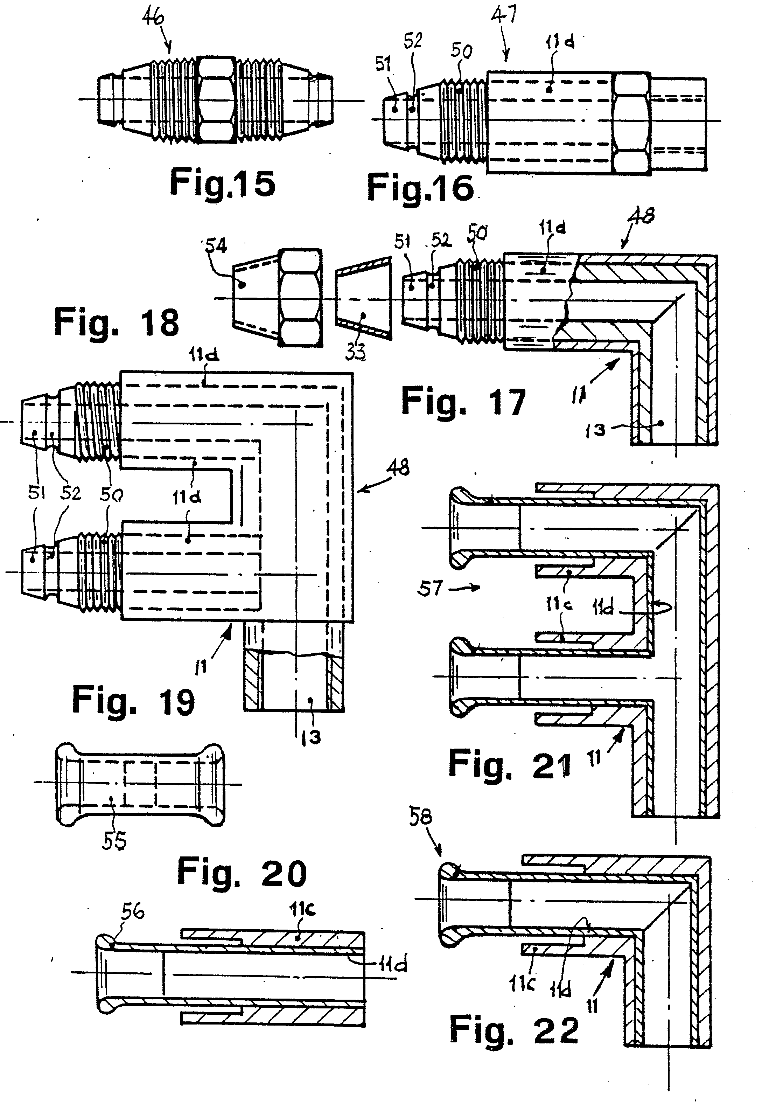

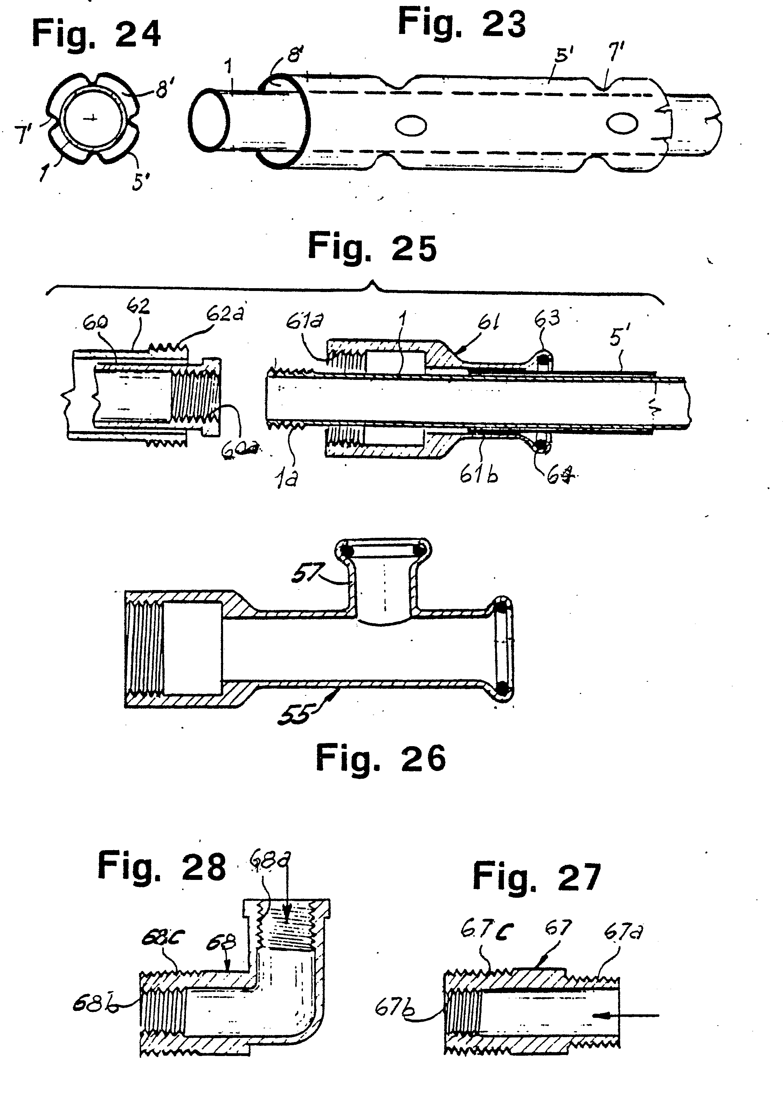

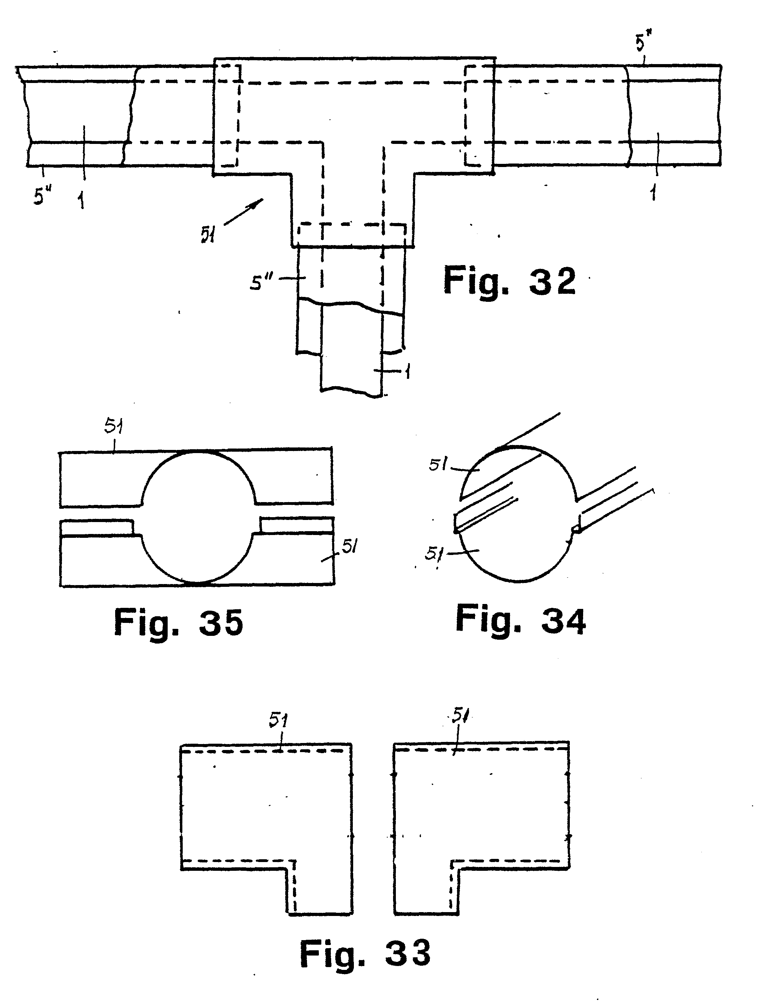

la FIG. 1 représente d'une manière très - schématique, un réseau de distribution de gaz avec collecteur ventilé en conformité avec l'invention muni de décharges externes; les FIG. 2 et 3 montrent respectivement une section transversale et une vue longitudinale partielle d'un premier mode de réalisation du collecteur ventilé selon l'invention; les FIG. 4, 5 et 6 montrent en section respectivement, un raccord simple, un raccord multiple et un joint à manchon avec corps en métal adaptés au collecteur des FIG. 2 et 3; la FIG. 7 montre, en vue en partie en section, le mode pour connecter un tronçon de collecteur des FIG 2 et 3 au raccord simple de la FIG. 4; les FIG. 8, 9 et 10 représentent en vue en section respectivement un manchon, un raccord multiple et un raccord simple adaptés à un collecteur ventilé avec gaine externe en plastique; les FIG. 11, 12, 13 et 14 représentent d'autres manchons de raccordement adaptés pour relier les raccords des FIG. 8, 9 et 10 à un collecteur ventilé avec gaine externe en plastique; la FIG. 15 représente un raccord de type connu à utiliser pour la connexion des raccords suivant le premier mode de realisation de l'invention; les FIG. 16, 17 et 18 représentent l'application du raccord de la FIG. 15 aux raccords suivant le premier mode de réalisation de l'invention; la FIG. 19 représente un autre type de raccord commercialisé applicable aux raccords suivant le premier mode de réalisation de l'invention; les FIG. 20, 21 et 22 illustrent l'application pratique du raccord de la FIG. 19 aux raccords suivant le premier mode de réalisation de l'invention; les FIG 23 et 24 montrent respectivement en perspective et en section transversale un deuxième mode de réalisation du collecteur ventilé pour un réseau de distribution de gaz selon la FIG. 1; les FIG. 25 et 26 montrent deux manchons de raccord coulissants simples, sans et respectivement avec attaque pour un conduit d'écoulement ou décharge, d'un collecteur ventilé des FIG. 23 et 24; les FIG. 27 et 28 montrent deux terminaux d'entrée et de sortie du collecteur des FIG 23 et 24; la FIG. 29 montre un manchon ventilé suivant le collecteur des FIG. 23 et 24; les FIG. 30 et 31 montrent un exemple de réalisation de l'interstice dans une dérivation en T et un coude pour le collecteur des FIG. 23 et 24; la FIG 32 montre un troisième mode de réalisation du collecteur ventilé suivant l'invention avec la conduite du gaz en fer soudée et respectivement, non soudée; la FIG. 33 montre la vue en plan, des deux éléments de la gaine du raccord en T du collecteur de la FIG. 32, avec conduite du gaz en fer soudée; la FIG. 34 montre en section les deux éléments de la gaine du collecteur de la FIG. 32 avec conduite du gaz en fer non soudée ou soudée; la FIG. 35 montrent en vue de face, les deux éléments de la gaine du raccord en T du collecteur de la FIG. 32 avec conduite du gaz en fer non soudée c'est-à-dire avec raccords filetés.

Réduite à sa structure essentielle et en référence la FIG. 1 des dessins annexés un collecteur ventilé pour la distribution de gaz en conformité avec l'invention comprend un conduite 1 pour le transport du gaz, les éventuelles ramification 2 de celle-ci et les manchons, raccords 3 et les coudes 4, des gaines de ventilation 5 entourantes coaxiales et reliées de manière stable à ladite conduite de manière à délimiter des interstices protecteurs pour empêcher la dispersion de gaz à la suite d'éventuelles fuites qui peuvent se manifester dans la conduite de distribution de gaz. L'interstice formé par la gaine 5 est à la pression atmosphérique, etant mis en communication avec un ou plusieurs tubes d'évacuation 6 qui débouchent à l'extérieur et dans une position telle à ne pas présenter de danger en cas de pertes de gaz, soit en raison de la position décentrée et extérieure, soit en raison de la capacité élevée de dispersion par ventilation ou autre, soit par effet dû à la différence de densité du gaz combustible par rapport à l'air (vers un point élévé si il s'agit de gaz ayant une densité inférieure à un, ou vers un point bas par rapport au réseau si il s'agit de gaz ayant une densité supérieure à un).

Sur les FIG 2 et 3 qui montrent respectivement une section transversale et une vue longitudinale partielle d'un premier mode de réalisation du collecteur ventilé selon l'invention, est représenté un collecteur composé d'une conduite 1 pour le transport du gaz et d'une gaine externe de ventilation 5 coaxiale à la première et de diamètre supérieur, utilisable pour un tronçon continu du réseau. Suivant ce premier mode de réalisation la gaine 5 est pourvue d'une série de parois 7 également espacées entre elles et s'étendant axialement. La longueur des parois 7 est telle qu'elle permet l'accouplement précis entre la conduite 1 et la gaine 5 et le centrage correspondant. En particulier, les parois 7 s'étendent radialement à partir de la gaine 5 vers le centre, formant corps unique.

Les parois 7 délimitent, dans l'espace compris entre la conduite 1 et la gaine 5, autant de chambres 8 dans lesquelles est recueilli le gaz provenant d'éventuelles fuites de la conduite 1. Pour mettre en communication entre elles les différentes chambres 8 le long de la gaine, les parois 7 sont avantageusement pourvues d'auvertures de communication appropriées. Toutes les chambres 8 confluent dans un tube de décharge (comme ceux indiqués en 6 sur la FIG. 1). La conduite de transport du gaz et la gaine externe 5 peuvent être réalisées soit en aluminium soit en plastique.

Normalement la conduite 1 est en cuivre ou en aluminium alors que la gaine est de préférence en aluminium ou en matière plastique. La gaine externe si elle est en aluminium, doit être revêtue d'une mince pellicule 9 de polyéthylène ou autre matière à auto-extinction éventuellement colorée, dans un but protecteur. Un collecteur de ce genre peut être réalisé en pièces de grande longueur (par ex. de 50 m) à enrouler en rouleaux et avec un diamètre de la gaine de plus de 25 mm.

Les raccordements pour le collecteur ventilé selon les FIG. 2 et 3 comprennent un raccord simple un raccord multiple et un joint à manchon avec un corps en métal, illustrés respectivement sur les FIG. 4, 5 et 6. Le raccord simple 10 de la FIG. 4 qui adapte par exemple le collecteur des FIG. 2 et 3 à un terminal de service comprend un corps tubulaire qui délimite un conduit interne 12 situé entre une première extrémité 11a, une extrémité de service 11b et une seconde extrémité 13 placée à 90° par rapport à l'axe du conduit 12. En correspondance de la première extrémité 11a est prévu un siège 14 pour un anneau d'etanchéité et une chambre 15 pourvue d'une butée intermédiaire 16, mise en communication au moyen de la connexion 17 avec un conduit des décharges non représenteé.

En position intermédiaire entre la connexion 17 et la seconde extrémité 13, le conduit interne 12 présente un tronçon à développement tronconique 18 avec évasement orienté vers l'extrémité de service 11b. Le long du tronçon troconique 18 est prévu un siège périphérique 9 pour un autre anneau d'étanchéité. Le raccord double 20 de la FIG.

5 est obtenu simplement en mettant en communication la seconde extrémité d'un premier raccord simple 10 avec le conduit interne 12' d'un second raccord 10' analogue. La connexion 13 est alignée avec la seconde extrémité 13' du corps tubulaire 11'. Dans le raccord double 20 de la FIG. 5, les deux connexions 17 et 17' d'évacuation débouchent dans un sous-collecteur commun 21 destiné à être relié à la tuyauterie de décharge non représentée. Ce raccord double 20 peut par exemple être utilisé lorsque l'on désire créer un embranchement sur un réseau de distribution de gaz. Le joint de connexion illustré sur la FIG. 6 pour deux tronçon du collecteur illustré sur les FIG. 2 et 3, est formé de deux corps tubulaires 11 à axes parallèles et formant corps unique, dans lesquels les conduits internes respectifs 12 sont placés en communication entre eux par l'intermédiaire d'un passage 23 de section appropriée à proximité des extrémités de service 11b respectives. Les chambres de recueillement des pertes de gaz des deux tronçons rectilignes non représentés sont mises en communication entre elles à travers les chambres 15 de deux corps tubulaires 11 et un conduit de connexion 24 correspondat.

Sur la FIG. 7 est illustré. en vue partiellement en section, le mode de connexion d'un tronçon 28 du collecteur illustré sur les FIG. 2 et 3, au raccord simple 10 de la FIG. 4. Ce tronçon est constitué d'une gaine externe 30 de ventilation en aluminium revêtue d'une pellicule de polyéthylène 31, et est relié de manière étanche au raccord 10. On insère une extrémité du tronçon 28 dans le conduit 12 du côté de la première extrémité 11a, après mise en place d'un anneau d'étanchéité 32 dans le siège 14, de manière que l'extrémité de la gaine externe 30, 31 vienne en appui sur la butée 16 de la chambre 15 et que la conduite interne 29 s'étende jusqu' au tronçon tronconique 18. On élargit avec un outil approprié l'extrémité de la conduite 29 de manière à la faire correspondre avec le tronçon tronconique 18 après mise en place d'un anneau d'étanchéité 33 dans le siège 19. On applique ainsi dans l'extrémité élargie 29a de la conduite interne, un élément tronconique tubulaire 34 qui est ensuite bloqué avec un écrou 35, tous les deux étant introduits par l'extrémité de service 11b qui est enfin fermée avec un bouchon 36. La chambre 15 isolée hermétiquement au moyen des anneaux d'étanchéité 32 et 33 recueille les éventuelles pertes de gaz s'écoulant dans les chambres du collecteur ventilé et les évacue à son tour vers un conduit de décharge à travers la connexion 17.

Sur les FIG. 8, 9 et 10 sont illustrés en section, respectivement un manchon 37, un raccord multiple 38 et un raccord simple 39 adaptés pour un collecteur avec gaine externe en matière plastique, le corps du machon ou du raccord étant réalisé en matière plastique analogue. Plus précisément, le corps tubulaire 11 est constitué d'un élément tubulaire métallique interne 11d qui délimite intérieurement le conduit 12 avec un tronçon tronconique 18, et un élément tubulaire externe 11c en plastique qui le recouvre complètement et s'étend jusqu' à la première extrémité 11a du corps 11. La connexion entre les manchons 37, les raccords 38 et 39 et le collecteur ventilé avec gaine externe en matière plastique s'effectue selon des techniques traditionnelles au moyen de manchons auxiliaires de raccordement 40, 41 et 42, lesquels sont illustrés sur les FIG. 11, 12, 13 et 14, par l'intermédiaire de rechauffements locaux de la matière plastique en connectant à une source d'énergie électrique appropriée non représentée, les résistances électriques 43 inclues dans les manchons, à travers des fiches 44. Par exemple, le manchon 40 montré en vue latérale sur la FIG. 11 et frontale sur la FIG. 12 est utilisable pour assembler le raccord double 38 de la FIG. 9 avec deux tronçons de collecteur ventilé. Dans ce cas la connexion des décharges, indiquée en 45, est prévue sur le manchon auxiliaire lui même. De manière analogue, le manchon auxiliaire 41 de la FIG. 13 peut être utilisé en combinaison avec le raccord 37 de la FIG. 8 tandis que le raccord auxiliaire 42 de la FIG. 14 peut être utilisé en combinaison avec le raccord simple 39 illustré sur la FIG. 10. Dans tous les cas, la conduite interne du collecteur ventilé est connectée au raccord comme décrit précédemment et illustré sur la FIG. 7. Sur la FIG. 15 est illustré un raccord 46 utilisable pour la connexion axiale de tronçons de collecteur ventilé avec gaine externe en matière plastique, et destiné à être ensuite recouvert avec le manchon 41 de la FIG. 13, lequel est ainsi électrosoudé aux deux tronçons.

D'autres variantes de réalisation des raccordements du collecteur ventilé selon la présente invention, basées sur le principe du raccord 46 de la FIG 15, sont représentées sur les FIG. 16, 17 et 18. Sur celles-ci, la première extrémité 11a du corps tubulaire 11 des raccords 47, 48 et 49, présente un tronçon fileté 50 et un tronçon tronconique 51 avec une gorge périphérique intermédiaire 52. Pour relier le collecteur ventilé à ces raccords, on applique sur le tronçon tronconique 51 l'extrémité élargie de la conduite interne 29 du tronçon 28 du collecteur, sur celle-ci on place un collier tronconique de raidissement 53 et enfin on bloque le tout avec un écrou 54 (FIG. 17). On utilise donc un des manchons auxiliaire illustré sur les FIG. 11 à 14, selon le cas, pour souder électriquement l'élément tubulaire externe en plastique 11c du raccord à la gaine externe du collecteur.

Sur la FIG. 19 est illustré un autre type de raccord 55 qui peut être utilisé pour relier axialement deux tronçons de collecteur ventilé en soudant électriquement au moyen d'un machon auxiliaire choisi parmi ceux illustrés sur les FIG. 11 à 14, placé sur le joint 55 précité. La conduite interne du collecteur ventilé est ensuite simplement engagée dans le joint 55, l'étanchéité étant assurée par une garnition appropriée non représentée.

Dans les FIG. 20, 21 et 22 est illustrée 1'application pratique du joint 55 de la FIG. 19 aux raccordements à utiliser avec le collecteur ventilé représenté sur les FIG. 2 et 3 des dessins annexés. Le corps 11 de ces raccords 56, 57 et 58 présente un élément tubulaire interne 11d en métal et un élément tubulaire externe 11c de revêtement en matière plastique.

Sur les FIG. 23 et 24 qui montrent respectivement en perspective et en section une deuxième forme de réalisation du collecteur ventilé de distribution de gaz de la FIG. 1, la conduite pour le gaz 1 en cuivre ou en aluminium est entourée par une gaine 5' également en cuivre ou en aluminium, laquelle présente des saillies internes localisées 7' destinées à assurer le centrage de la gaine sur la conduite interne, et donc former les interstices communicants 8'

Sur la FIG. 25 un morceau de conduite 1 et un raccord 60 filetés à leurs extrémités en 1a et 60a, sont accouplés directement entre eux pour former la conduite de transport de gaz. Dans ce cas, le morceau de conduite 1 est entouré par la gaine 5' avec un raccord 61 fileté en 61a, alors que le raccord 60 est entouré par un raccord à manchon 62 avec filetage en 62a. Le mancon 61 est assemblable d'un côté avec son filetage 61a au filetage 62a du raccord 62. et de l'autre côté prévoit un propre tronçon 61b réduit et profilé pour former un siège annulaire 63, et également susceptible d'être serré sur la gaine 5' moyennant interposition d'une garnition annulaire 64 et sous l'effet d'une réduction de diamètre du tronçon 63 et 61b, obtenue bien sûr avec la déformation pour le serrage.

Les dérivations pour les évacuations ou décharges 6 de la FIG. 1 des dessins annexés peuvent être obtenues avec n'importe quel système approprié et de réalisation facile, en tenant compte du fait que dans les interstrices formés par la gaine il n'y a pas de pression par rapport à l'extérieur en raison de la présence des ouvertures de décharges. Sur la FIG. 26 est montré un manchon 65 analogue au manchon 61, mais muni d'une dérivation 66 déformable et profilée comme la partie 63 du manchon 61, de manière à être serrées sur une conduite dérivée d'évacuation telle que celle indiquée en 6.

Les FIG. 27 et 28 montrent deux terminaux d'extrémité rectiligne 67 et coude 68. Ceux-ci présentent des filetages 67a et 68a de raccordement avec la conduite du gaz du collecteur ventilé, et des filetages 67c et 68c de raccordement avec la gaine du collecteur ventilé.

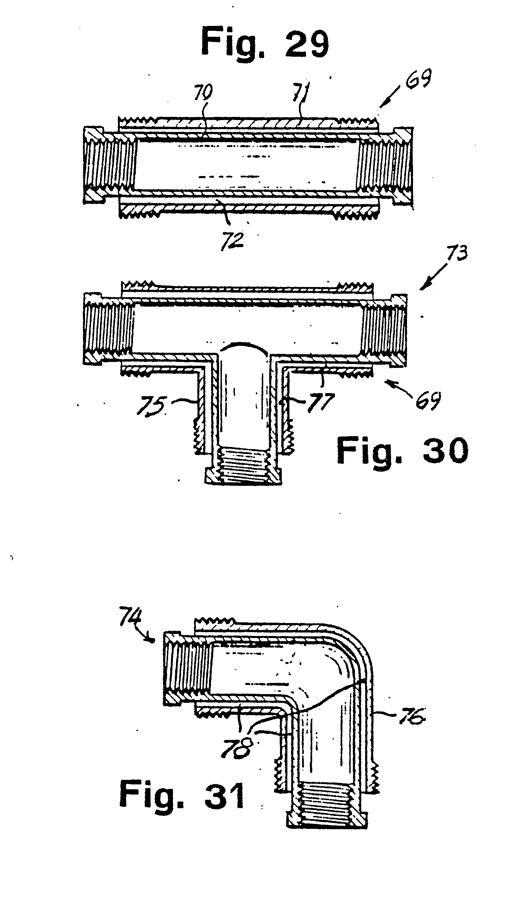

La FIG. 29 représente un raccord à manchon ventilé 69 avec deux parties 70 et 71 coaxiales et pourvus de filetages d'extrémité pour la continuité de la conduite et de la gaine du collecteur. En particulier, ces parties 70 et 71 ont la fonction d'accouplement entre les tuyauteries contigues, et forment un passage de ventilation 72 entre elles.

Sur les FIG. 30 et 31 est illustré un exemple de réalisation de l'interstrice dans une dérivation en T 73 et en coude 74, des gaines analogues 75 en T et en coude 76 étant réalisés à l'extérieur des pièces 73 et 74 au moyen de procédés appropriés connus en soi. Les raccords 75 et 76 forment des passages de ventilation 77 et 78 autour des raccords 73 et 74, et sont pourvus à leurs extrémités de filetages (comme les pièces 73 et 74) pour engager des éléments contigus pour la formation de l'interstice de ventilation 8' autour des tronçons contigus de conduite à protéger.

Les raccordements décrits en référence aux FIG. 25 à 31 sont réalisés en cuivre ou aluminium. La gaine 5" et les raccordements du collecteur ventilé illustré sur la FIG. 32 sont réalisés en metal ou matière plastique, soudés électriquement sur place.

## Revendications

1) Collecteur ventilé de distribution de gaz pour usage domestique et d'autre type, caractérisé en ce qu' il comprend une conduite (1) pour le transport du gaz avec les évventuelles ramifications (2) et les raccords (3,4) entre elles, une gaine de ventilation étanche, entourante (5,5'), coaxiale et reliée à ladite conduite de manière à délimiter des interstices (8,8') à la pression atmosphérique, de recueillement et d'écoulement des éventuelles fuites de gaz provenant de la conduite, à travers des décharges (6)en communication avec l'extérieur.

2) Collecteur ventilé selon la revendication 1), caractérisé en ce que ladite gaine (5) est tubulaire et que la connexion précise à la conduite interne (1) est obtenue au moyen d'une série de parois radiales (7) espacées entre elles, disposées entre la gaine et la conduite et destinées à délimiter des chambres longitudinales communicantes (8) de recueillement et écoulement d'éventuelles fuites de gaz.

3) Collecteur ventilé selon la revendication 2), caractérisé en ce que lesdites parois (7) s'étendent radialement à partir de ladite gaine externe (5) d'une seule pièce avec elle, vers ladite conduite interne (1).

4) Collecteur ventilé selon les revendications 1) à 3), caractérisé en ce que la conduite interne est en cuivre ou en aluminium ou en plastique et la gaine de ventilation (5.5') est en aluminium plastifié ou en plastique à auto-extinction.

5) Collecteur ventilé selon l'une quelconque des revendications précédentes, caractérisé en ce que pour les raccordements en particulier les joints (22), raccords simples (10) et multiples (20), il utilise au moins un corps tubulaire (11.11') destiné à engager avec l'une première de ses extrémités - (11a) la conduite interne (1.29) gainée, une chambre annulaire (15) en correspondance de ladite extrémité, délimitée par la surface externe de ladite conduite, ladite chambre étant en communication avec lesdits interstices ou lesdites chambres (8); des moyens (17,17',21) pour mettre en communication ladite chambre avec lesdits conduits de décharge (6); des moyens (18,19,33,34,35) pour bloquer de manière étanche ladite conduite interne dans ledit corps tubulaire.

6) Collecteur ventilé selon la revendication 5), caractérisé en ce que ledit corps tubulaire (11,11') délimite intérieurement un conduit (12,12') compris entre au moins une première extrémité (11a, 11a') et une extrémité de service (11b,11b'), et présente un tronçon intermédiaire (18) de forme tronconique évasé vers ladite extrémité de service.

7) Collecteur ventilé selon l'une quelconque des revendications 5) et 6), caractérisé en ce que lesdits moyens pour bloquer de manière hermétique ladite conduite interne (29) dans ledit corps tubulaire (11,11'), conduite dont l'extrémité est élargie et faite correspondre avec ledit tronçon tronconique, comprennent un élément tronconique (34) destinè à provoquer le forcement ètanche de ladite extrémité élargie contre ledit tronçon tronconique, ledit élément tronconique étant bloqué par un écrou de blocage (35).

8) Collecteur ventilé selon l'une quelconque des revendications 5) à 7), caractrérisé en ce que ledit corps tubulaire (11.11') est formé d'un élément métallique interne (11d) et d'un élément tubulaire externe en plastique (11c), ce dernier étant destiné à l'assemblage par soudure électrique, au moyen d'un manchon auxiliaire (40,41,42), à la gaine externe, en matière plastique.

9) Collecteur ventilé selon la revendication 1), caractérisé en ce qu' il comprend une conduite (1) pour le gaz et une gaine tubulaire (5') en fer ou en aluminium qui présente des déformations localisées (7') vers l'intérieur pour le centrage et la connexion à la conduite interne (1).

10) Collecteur ventilé selon l'une quelconque des revendications 1), 2), 3), et 9), caractérisé en ce qu' il comprend des raccords (60,62) à vis et à manchon coulissant (61) placer sur la gaine tubulaire (5') et aptes à former étanchéité hermétique sur la gaine, par la présence de garnitions annulaires - (64) recues dans des parties à canal interne (63) et déformables pour obtenir une réduction de diamètre dans lesdits manchons (61).

11) Collecteur ventilé selon l'une quelconque des revendications 1), 2), 3), 9) et 10), caractérisé en ce que, autour de coudes et de dérivations sont formés des structures correspondantes géométriquement similaires (69,73,74), lesquelles forment des interstices de passage (72, 77,78) suivant la conformation des coudes et des dérivations, pour assurer la continuité des interstices ou chambres de recueillement et écoulement (8') formées par la gaines autour de la conduite du gaz.

12) Collecteur ventilé selon l'une quelconque des revendications 1) à 3), 9) et 10), caractérisé en ce qu'il comprend des coudes et dérivations - (79,80) solidaires de parties formant gaines annulaires (81,82) dans les zones de raccordement à de ces parties, pour obtenir la possibilité de branchement avec des tronçons contigus de collecteur; en correspondance des courbes (81a) et branchements de dérivation (82a), la section étant réduite par rapport à la section annulaire qu'elles forment concentriquement aux raccords. mais en assurant toujours la continuité de l'interstice ou des chambres de recueillement et écoulement (83´ 84).

13) Collecteur ventilé selon la revendication 1) caractérisé en ce qu'il comprend une conduite (1) pour le gaz, en fer avec des tronçons soudés et une gaine (5") tubulaire en metal avec des raccords en T en deux éléments (51) symétriques en metal à monter lors de la mise en place de la conduite (1).

14) Collecteur ventilé selon la revendication 13), caractérisé en ce qu'il comprend une conduite (1) pour le gaz, en fer avec des tronçons raccordés par vissage et une gaine (5") tubulaire en deux éléments de plastique formant coquille avec des raccords en T en deux éléments (51) en plastique formant coquille à souder sur place autour de la conduite (1) après sa mise en place.

# Fig. 1

# Fig. 2

# Fig. 3

Fig. 5

Fig. 4

Fig. 6

Fig. 7

Fig. 8

Fig. 9

Fig. 10

Fig. 11

Fig. 12

Fig. 13

Fig. 14

**Fig.15**

**Fig.16**

**Fig. 18**

**Fig. 17**

**Fig. 19**

**Fig. 20**

**Fig. 21**

**Fig. 22**

**Fig. 24**

**Fig. 23**

**Fig. 25**

**Fig. 26**

**Fig. 28**

**Fig. 27**

# Fig. 29

70   71   69

72

73

75   77   69

# Fig. 30

74

78   76

# Fig. 31

**Fig. 32**

**Fig. 35**

**Fig. 34**

**Fig. 33**